**Europäisches Patentamt**

**European Patent Office**

**Office européen des brevets**

(11) Numéro de publication: **0 046 425**
**B1**

## FASCICULE DE BREVET EUROPEEN

(45) Date de publication du fascicule du brevet:
03.10.84

(51) Int. Cl.³: **B 65 G 15/60**

(21) Numéro de dépôt: **81401258.9**

(22) Date de dépôt: **04.08.81**

(54) Dispositif à bande transporteuse destiné au transport du béton.

(30) Priorité: **08.08.80 FR 8017627**

(43) Date de publication de la demande:
**24.02.82 Bulletin 82/8**

(45) Mention de la délivrance du brevet:
**03.10.84 Bulletin 84/40**

(84) Etats contractants désignés:
**AT BE CH DE GB IT LI LU NL SE**

(56) Documents cités:
**FR - A - 1 398 848**
**FR - A - 1 562 083**
**FR - A - 2 069 999**
**FR - A - 2 310 941**
**GB - A - 2 008 522**
**US - A - 3 474 893**

(73) Titulaire: **ETS. THENAUD et FILS, La Bastille-Les Couets, F-44340 Bouguenais (FR)**

(72) Inventeur: **Thenaud, René, 23, rue de la Commune, Reze (FR)**
Inventeur: **Thenaud, Luc, Trentemoult, Reze (FR)**

(74) Mandataire: **Phélip, Bruno et al, c/o Cabinet Harlé & Phélip 21, rue de la Rochefoucauld, F-75009 Paris (FR)**

## Description

La présente invention est relative à un dispositif à bande transporteuse destiné au transport du béton.

On connait d'après IT-A-832154 ou FR-A-156083, un transporteur à béton, comportant un châssis métallique monté de façon articulée sur un support qui peut être le châssis d'un camion-bétonnière, une bande transporteuse sans fin, un rouleau d'entraînement de ladite bande, actionné par un moteur et au moins un rouleau de renvoi, des moyens-supports sur lesquels glisse la bande dans son trajet aller, c'est-à-dire pendant qu'elle est chargée de béton, et des rouleaux pour soutenir la bande dans son trajet de retour, lesdits rouleaux et lesdits moyens-supports étant supportés par ledit châssis. Ce dispositif est repliable et/ou raccourcissable pour les déplacements du camion.

Il doit être robuste pour résister dans les conditions d'emploi sur un chantier, et en même temps il doit être léger. En effet, il travaille en porte-à-faux et une augmentation de son poids se traduit par la nécessité de renforcer la fixation sur le châssis, et/ou le châssis lui-même, ce qui entraîne une nouvelle augmentation du poids du camion, lequel est limité par les règlementations.

Depuis quelques années, on connait des alliages d'aluminium qui sont capables de résister à l'action du béton, lequel est agressif vis-à-vis de l'aluminium ordinaire, et il est tentant de chercher à utiliser de tels alliages, en remplacement de l'acier qu'on utilise habituellement, pour alléger un dispositif de transport.

Cependant, il n'est pas possible de remplacer simplement l'acier par l'alliage d'aluminium pour diverses raisons, tenant principalement aux caractéristiques mécaniques et de frottement de l'alliage d'aluminium, qui sont différentes de celles de l'acier.

On peut, évidemment, obtenir un allègement appréciable en remplaçant l'acier par un alliage d'aluminium dans la structure du châssis, mais cet allègement est limité par la présence de rouleaux porteurs, en acier, montés sur des roulements à billes placés dans des logements étanches.

Des rouleaux porteurs allégés doivent être exécutés spécialement et sont extrêmement coûteux, et souvent moins robustes que les rouleaux de série.

On connaît, il est vrai, des dispositifs transporteurs à bande dépourvus de rouleaux. Par exemple le brevet FR 1 398 848 décrit un transporteur dans lequel la face inférieure de la bande repose sur une tôle de soutien, plane, pourvue de deux bords verticaux de guidage. Une telle solution ne peut convenir que pour de courtes longueurs à cause du frottement important. En outre, l'entretien de l'espace à peu près clos compris entre la bande et la tôle est difficile, d'où un risque d'encrassement rapide augmentant encore le frottement.

Dans le brevet FR 2 069 999, la bande est soutenue par des patins de faible largeur portés par des traverses. La longueur unitaire de ces patins, dans le sens de déplacement de la bande, est inférieure à la distance qui les sépare dans le même sens, et la bandes est rendue plus rigide par des bossages longitudinaux qui portent chacun une bande de clinquant. Cette bande de clinquant passe dans une rainure longitudinale du patin, ce qui assure le guidage de la bande. Ce système est de nature à permettre des gains de poids appréciables, mais la conjugaison de patins de faible longueur avec des bossages de raidissement de la bande présente des inconvénients: si la bande est trop raide elle subit des contraintes exagérées au passage sur les rouleaux d'extrémité, et si la bande est trop souple, les patins et les traverses qui les supportent sont soumis à des efforts de flexion alternés par les irrégularités de la charge et doivent être renforcés. Par ailleurs, la rainure de chaque patin doit être entretenue soigneusement, ce qui n'est pas toujours facile.

Ainsi, les système proposés dans l'art antérieur pour remplacer les rouleaux ne sont pas satisfaisants, car ils n'apportent pas de solution convenabel à deux problèmes: 1°) réduire le frottement sans augmenter la rigidité de la bande, et 2°) assurer un guidage correct. En ce qui concerne ce deuxième point, on peut observer que les deux brevets cités proposent une structure de support à fond plat et à bords perpendiculaires au fond, le guidage étant assuré par le contact de ces bords soit avec les bords de la bande (brevet FR 1 398 848) soit avec les bords de bossages prévus sur la face inférieure de la bande (brevet FR 2 069 999). On doit observer que les inventeurs ont fait des essais pour faire glisser une bande sur des supports sans bords perpendiculaires mais ayant en section une forme générale en U avec une pente sur le bord de 15 à 25° analogue à la pente prévue sur certains transporteurs à rouleaux. Ces essais ont montré un guidage insuffisant.

La présente invention a pour but de fournir un nouveau transporteur à bande, d'un poids considérablement réduit par rapport aux transporteurs classiques grâce au remplacement d'une partie de l'acier par un alliage d'aluminium résistant à l'action du béton, et qui présente néanmoins les mêmes qualités de robustesse et de durée qu'un transporteur usuel.

La présente invention fournit donc un transporteur à béton, comportant un châssis métallique monté de façon articulée sur un support qui peut être le châssis d'un camion-bétonnière, une bande transporteuses sans fin, un rouleau d'entraînement de ladite bande, actionné par un moteur et au moins un rouleau de renvoi, des moyens-supports sur lesquels glisse la bande dans son trajet aller, c'est-à-dire pendant qu'elle est chargée de béton, et des rouleaux pour soutenir la bande dans son trajet de retour, lesdits rouleaux et lesdits moyens-supports étant supportés par ledit châssis qui présente les particularités que les dits moyens-supports sont constitués par des glissières (3, 4, 5) allongées dans le sens du mouvement en un alliage d'aluminium résistant à l'action du béton, chaque glissière étant en un ou plusieurs tronçons successifs, dont la longueur cumulée est au moins égale à 85% de la longueur du châssis, et la largeur cumulée des glissières étant comprise entre 25 et 45% de la largeur de la bande, en ce que l'ensemble des glissières constitue une auge à section arrondie, dont les bords font avec l'horizontale un angle compris entre 30 et 50°, et en ce que la face de la bande qui est en contact avec lesdites glissières a un coefficient d'adhérence sur celles-ci qui est inférieur à 0,20.

De préférence, l'ensemble du châssis, à l'exception des axes d'articulation sur le support, est constitué du même alliage d'aluminium que les glissières et si le châssis est constitué de plusieurs éléments successifs articulés les uns sur les autres, les éléments dudit châssis sont tous constitués du même alliage d'aluminium que les glissières.

Suivant une modalité avantageuse, les rouleaux destinés à soutenir la bande dans son trajet de retour sont constitués du même alliage d'aluminium que les glissières, et comportent des nervures extérieures de hauteur et nombre calculés pour que la bande ne soit en contact avec le rouleau que par ses nervures.

La conjugaison des glissières en alliage d'aluminium et d'une bande transporteuse dont la face interne a un faible coefficient de frottement sur cet alliage permet de résoudre cette difficulté et d'obtenir un ensemble démontable et de faible poids, si bien que les pièces soumises à de fortes contraintes mécaniques, telles que les platines formant des chapes et des tenons pour les articulations, à l'exception des axes proprement dits, peuvent être constitués en alliage d'aluminium.

La raison pour laquelle la longueur d'une glissière doit être au moins 85% de celle du châssis est qu'une longueur plus faible risque d'entraîner une usure accélérée de la bande, en particulier aux endroits où, après avoir été non soutenue, elle entre à nouveau en contact avec la glissière ou un tronçon de celle-ci. Si la largeur cumulée des glissières est augmentée, le frottement est lui aussi augmenté, d'où des efforts plus grands sur la bande. Si elle est trop réduite, la bande subit des contraintes au fléchissement transversal. La forme particulière de l'auge formée par les glissières correspond à des considérations de guidage. On a constaté que si les bords de l'auge sont plus faiblement inclinés, la bande a tendance à se déplacer fortement d'un bord à l'autre, contrairement à ce qu'on observe avec des rouleaux. A l'opposé, une auge de forme trop profonde ne conduit qu'à des augmentations de poids et d'encombrement.

Il est impossible d'utiliser la même solution pour les rouleaux de retour, car ils sont en contact avec la face externe de la bande, et cette face, qui est en matériau à grande résistance à l'abrasion, ne peut pas présenter simultanément un coefficient de frottement assez faible.

Attendu que les rouleaux de retour sont moins sollicités et plus simples que les rouleaux d'aller, on a pensé à les constituer à partir de tronçons de tube en alliage d'aluminium montés sur des roulements étanches. On a alors constaté que ces rouleaux, du fait sans doute de phénomène de tension superficielle, avaient une tendance accrue à essorer la bande et à projeter ce laitier de ciment à une distance appréciable de la bande. Ce nouveau problème a été résolu en prévoyant des rouleaux nervurés. La bande, sur laquelle adhère le laitier de ciment, est en contact avec le rouleau sur une partie très faible de sa surface, entre $1/8$ et $1/15$ de celle-ci, et, de ce fait, la plus grande partie du laitier reste sur elle.

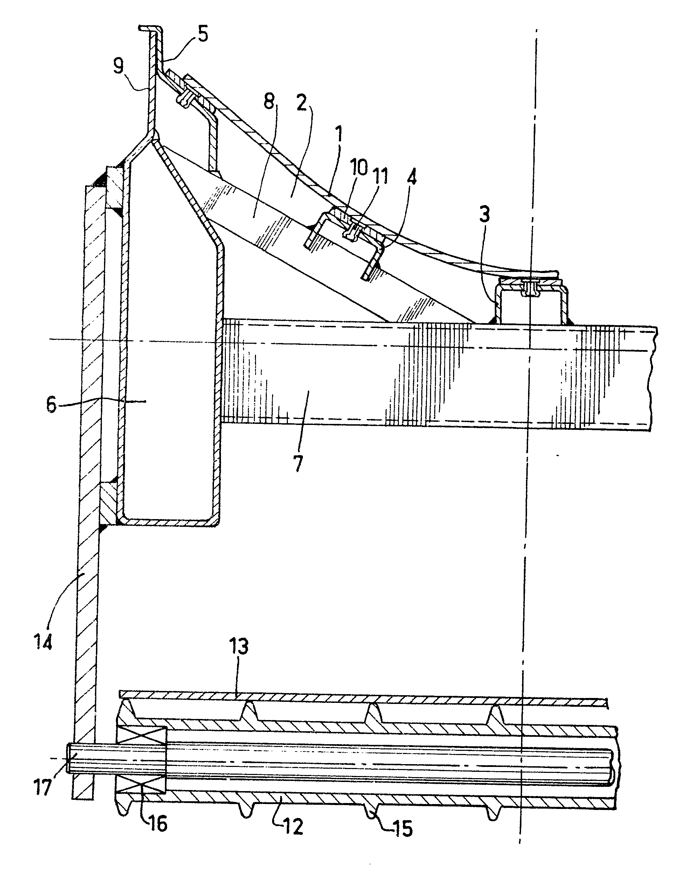

La présente invention va être exposée plus en détail à l'aide d'un exemple pratique, non limitatif, de réalisation selon l'invention, en s'aidant de la figure unique qui est une demi-coupe d'un élément de transporteur pliable selon l'invention.

La bande transporteuse 1 elle-même est une bande du type RTS 200/2-1.5/100 fabriquée par la Société Ammeraal, à deux plis, dont la chaîne est en polyester et la trame en polyamide. Sa face supérieure est constituée de caoutchouc abrasif d'épaisseur 1,5 mm et sa face inférieure est en toile écrue, dont le coefficient de frottement sur l'aluminium est de 0,15. La résistance à la rupture de cette bande est de 200 kg par cm de largeur.

Le brin supérieur de la bande circule sur un berceau à section en V, de profondeur 100 mm pour une largeur de 330 mm, c'est-à-dire que sa pente transversale est plus accusée que sur les transporteurs classiques à rouleaux. Cette pente est plus forte vers le bord, où elle atteint 40° environ.

Le berceau 2 comprend cinq glissières 3,4, 5 formées des profilés en alliage d'aluminium du type AG 5 MH III selon la norme NF A 02104, disposées parallèlement à la direction de la bande, d'une largeur de 25 mm environ. Cet alliage contient en principe, en % en poids: Mg 5;2,Zn 0,2; FE $\leqslant$ 0,5 Si $\leqslant$ 0,4; Cu $\leqslant$ 0,1; Mn $\leqslant$ 1; Ti $\leqslant$ 0,15; Cr $\leqslant$ 0,25, sa limite d'allongement est 20% environ, sa dureté Brinell est de 65–75 et sa limite de fatigue est 14,5 hbar.

La glissière centrale 3 et les glissières intermédiaires 4 sont en forme de U renversé, leur partie ouverte étant repliée vers le bas. La glissière de bordure 5 est de forme plus compliqué; elle comprend une partie de support de la bande oblique, qui est reliée à une partie verticale formant bordure, et ces deux parties portent chacune une aile d'appui sur la structure portante. Cette dernière comporte des montants longitudinaux creux 6, des traverses tubulaires 7 et des entretoises obliques 8 également tubulaires qui relient chaque traverse à la partie supérieure du montant. L'ensemble de cette structure est fait du même alliage que les glissières.

La glissière centrale 3 est portée directement par la traverse 7, sur laquelle elle est soudée. La glissière intermédiaire 4 est portée par les entretoises 8 et la glissière de bordure s'appuie par une des ailes sur les entretoises et par l'autre aile, sur une aile verticale 9 qui prolonge vers le haut le montant 6. Dans une variante, la glissière de bordure est portée entièrement par le montant 6.

La surface supérieure des glissières qui est en contact avec la bande transporteuses 1 est garni de bandes de glissement en polyéthylène «Naturel» commercialisé par la Société Faber à Sedan, maintenues par des rivets 11. L'avantage de ces bandes de glissement est de réduire encore le frottement entre la bande transporteuse et la glissière, donc de réduire l'usure de la consommation de force motrice: toutefois, la disparition accidentelle, ou par usure d'une de ces bandes de glissement n'entraîne pas une immobilisation du transporteur, étant donné les bonnes qualités de glissement du métal dont sont formées les glissières.

A leur extrémité, les glissières sont incurvées vers le bas pour permettre au transporteur de fonctionner, même lorsque les différents éléments du transporteur ne sont pas en prolongement l'un de l'autre, sans risquer d'accrocher la face inférieure de la bande.

Sous le berceau, les rouleaux 2 de soutien du brin de retour 13 de la bande 1 sont supportés à leurs extrémités par des plaques verticales 14 sur les montants longitudinaux 6. Ces rouleaux sont constitués par des tubes nervurés, toujours en alliage AG 5 M H III, de diamètre inférieur 40 mm environ et de diamètre extérieur 50 mm environ, portant tous les 57 mm une nervure transversale 1 de 5 mm de haut et 5 mm de largeur à la base, de section arrondie. La bande est ainsi en contact avec le rouleau sur environ $1/12$ de sa surface.

Des roulements 6 sont logés à l'extrémité de chaque rouleau pour leur permettre de tourner sur des axes 17 portés par les plaques 14.

Aux extrémités des éléments, des platines en alliage AG 5 MH III forment des chapes et des tenons pour les articulations, seuls les axes étant en acier.

Les partie accessoires de l'ensemble du transporteur : trémie de chargement, casque anti-projection, trémie de recentrage sous le casque, caisson de soutien et rotation etc.. sont dans le même alliage. Le gain de poids total ainsi obtenu est de l'ordre de 40% par rapport à un transporteur classique.

Le transporteur décrit précédemment présente en outre d'autres avantages importants. D'abord, le bord de la bande est en appui contre la partie verticale de la glissière 5, de sorte que l'eau et le laitier de ciment ne peuvent pas passer sous la bande et salir le châssis. Ce nettoyage est donc facilité.

Ensuite, les bandes de glissement placées à la surface des glissières et formées de polyéthylène ou même d'aluminium, peuvent être facilement remplacées lorsqu'elles sont usées.

Enfin, les différents éléments du transporteur peuvent éventuellement être inclinés les uns par rapport aux autres. Cette disposition est avantageuse car elle évite la ségrégation du mortier et du gravier. Cette inclinaison permet aussi la mise des éléments à des hauteurs convenables de travail. Par exemple, il est avantageux que les deux premiers éléments puissent être inclinés de 15° au maximum l'un par rapport à l'autre et que les deux derniers puissent être inclinés de 30° au maximum l'un par rapport à l'autre.

Selon une autre caractéristique avantageuse, le transporteur peut être démonté facilement, grâce à son montage sur un vérin qui peut être introduit dans un logement solidaire d'un châssis fixe, ou retiré de ce logement. Ainsi, en cas de panne du transporteur, le camion-malaxeur associé peut continuer à être utilisé. De même, en cas de panne du camion-malaxeur, le transporteur peut être utilisé sur un autre véhicule.

## Revendications

1. Transporteur à béton, comportant un châssis métallique monté de façon articulée sur un support qui peut être le châssis d'un camion-bétonnière, une bande transporteuses sans fin (1) un rouleau d'entraînement de ladite bande, actionné par un moteur et au moins un rouleau de renvoi, des moyenssupports sur lesquels glisse la bande dans son trajet aller, c'est-à-dire pendant qu'elle est chargée de béton, et des rouleaux pour soutenir la bande dans son trajet de retour, lesdits rouleaux et lesdits moyens-supports étant supportés par ledit châssis, caractérisé en ce que lesdits moyens-supports sont constitués par des glissières (3,4,5) allongées dans le sens du mouvement en un alliage d'aluminium résistant à l'action du béton, chaque glissière étant en un ou plusieurs tronçons successifs dont la longueur cumulée est au moins égale à 85% de la longueur du châssis, et la largeur cumulée des glissières étant comprise entre 25 et 45% de la largeur de la bande, en ce que l'ensemble des glissières constitue une auge à section arrondie, dont les bords font avec l'horizontale un angle compris entre 30 et 50°, et en ce que la face de la bande qui est en contact avec lesdites glissières a un coefficient d'adhérence sur celles-ci qui est inférieur à 0,20.

2. Transporteur selon la revendication 1, caractérisé en ce que l'ensemble du châssis, à l'exception des axes d'articulation sur le support est constitué du même alliage d'aluminium que les glissières.

3. Transporteur selon l'une des revendications 1 ou 2 et dont le châssis est constitué de plusieurs éléments successifs articulés les uns sur les autres, caractérisé en ce que les éléments dudit châssis sont tous constitués du même alliage d'aluminium que les glissières.

4. Transporteur selon l'une des revendications 1 à 3, caractérisé en ce que les rouleaux (12) destinés à soutenir la bande dans son trajet de retour sont constitués du même alliage d'aluminium que les glissières et comportent des nervures extérieures (15) de hauteur et nombre calculés pour que la bande ne soit en contact avec le rouleau que par ses nervures.

5. Transporteur selon l'une des revendications 1 à 4, caractérisé en ce que les glissières sont garnies, sur leur face qui est en contact avec la bande (1), par des bandes de glissement (10) en matière à faible frottement.

6. Transporteur selon la revendication 5, caractérisé en ce que ladite matière à faible frottement est du polyéthylène naturel, alors que la face de la bande (1), qui est en contact avec lesdites glissières, est en toile écrue.

7. Transporteur selon l'une des revendications 1 à 6, caractérisé en ce que l'alliage d'aluminium est du type AG5 MH III, contenant en % en poids: Mg 5,2; Zn 0,2; Fe ⩽ 0,5; Si ⩽ 0,4; Cu ⩽ 0,1; Mn ⩽ 1; Ti ⩽ 0,15; Cr ⩽ 0,25 et ayant une limite d'allongement de 20% environ, une dureté Brinell de 65–75, une limite de fatigue de 14,5 hbar.

## Patentansprüche

1. Betontransportvorrichtung mit einem metallischen Träger, der gelenkig auf einem Support angeordnet ist, der das Chassis eines Betontransportfahrzeuges sein kann, einem in sich geschlossenen Transportband (1), einer Bandantriebsrolle, die von einem Motor angetrieben wird, und mindestens einer Umlenkrolle, mit Abstützmitteln, auf denen das Band während seiner Vorwärtsbewegung gleitet, d.h. während es mit Beton belastet ist, und Rollen zum Halten des Bandes auf der Rücklaufstrecke, welche Rollen und Abstützmittel von dem Chassis getragen sind, dadurch gekennzeichnet, dass die Abstützmittel von in Bewegungsrichtung langgestreckten Gleitschienen (3, 4, 5) aus einer gegen die Wirkung von Beton widerstandsfähigen Aluminiumlegierung gebildet sind, wobei jede Gleitschiene als ein oder mehrere aufeinanderfolgende Stücke ausgebildet ist, deren Gesamtlänge zumindest gleich 85% der Trägerlänge beträgt und wobei die Gesamtbreite der Gleitschienen zwischen 25 und 45% der Bandbreite beträgt, dass die Gesamtheit der Gleitschienen einen Trog mit abgerundetem Querschnitt bildet, dessen Seiten mit der Horizontalen einen Winkel zwischen 30 und 50° bildet, und dass die mit den Gleitschienen in Kontakt stehende Bandseite einen Adhäsionskoeffizienten an jenen aufweist, der unter 0,2 liegt.

2. Transportvorrichtung nach Anspruch 1, dadurch gekennzeichnet, dass die Gesamtheit des Trägers mit Ausnahme der Anlenkachsen am Support aus der gleichen Aluminiumlegierung besteht wie die Gleitschienen.

3. Transportvorrichtung nach einem der Ansprüche 1 oder 2, deren Träger von mehreren aufeinanderfolgenden miteinander gelenkig verbundenen Elementen besteht, dadurch gekennzeichnet, dass die Elemente des Trägers sämtlich aus der gleichen Aluminiumlegierung wie die Gleitschienen bestehen.

4. Transportvorrichtung nach einem der Ansprüche 1 bis 3, dadurch gekennzeichnet, dass die zum Halten des Bandes auf seiner Rücklaufstrecke bestimmten Rollen (12) aus der gleichen Aluminiumlegierung bestehen wie die Gleitschienen und äussere Rippen (15) in einer Höhe und Anzahl aufweisen, welche so berechnet sind, dass das Band mit den Rollen nur an deren Rippen in Kontakt ist.

5. Transportvorrichtung nach einem der Ansprüche 1 bis 4, dadurch gekennzeichnet, dass die Gleitschienen auf ihrer in Kontakt mit dem Band (1) stehenden Seite mit Gleitbändern (10) aus einem Material geringer Reibung versehen sind.

6. Transportvorrichtung nach Anspruch 5, dadurch gekennzeichnet, dass das Material geringer Reibung Naturpolyäthylen ist, während die Seite des Bandes (1), die in Kontakt mit diesen Gleitschienen steht, ungebleichte Leinwand ist.

7. Transportvorrichtung nach einem der Ansprüche 1 bis 6, dadurch gekennzeichnet, dass die Aluminiumlegierung vom Typ AG5 MH III ist, enthaltend in Gew.-%: Mg 5,2; Zn 0,2; Fe ⩽ 0,5; Si ⩽ 0,4; Cu ⩽ 0,1; Mn ⩽ 1; Ti ⩽ 0,15; Cr ⩽ 0,25 und eine Streckgrenze von etwa 20%, eine Brinell-Härte von 65–75, eine Ermüdungsgrenze von 14,5 hbar aufweist.

## Claims

1. Concrete conveyor comprising a metal frame mounted in an articulated manner on a support which can be the chassis of a concrete-mixer lorry, an endless conveyor belt (1), a roller driving the said belt and actuated by a motor, and at least one return roller, supporting means on which the belt slides on it outward trip, that is to say during the time when it is loaded with concrete, and rollers for supporting the belt on its return trip, the said rollers and the said supporting means being supported by the said frame, characterised in that the said supporting means consist of slides (3, 4, 5) elongated in the direction of movement and made of an aluminium alloy resistant to the action of the concrete, each slide being in the form of one or more successive portions, the accumulated length of which is at least equal to 85% of the length of the frame, and the accumulated width of the slides being between 25 and 45% of the width of the belt, in that the slides as a whole from a trough of rounded cross-section, the edges of which form an angle of between 30 and 50° with the horizontal, and in that the face of the belt which is in contact with the said slides has a coefficient of adhesion on the latter which is less than 0.20.

2. Conveyor according to claim 1, characterised in that the frame as a whole, with the exception of the pins for arcticulation on the support, is made of the same aluminium alloy as the slides.

3. Conveyor according to one of claims 1 or 2, the frame of which consists of several successive elements articulated on one another, characterised in that the elements of the said frame are all made of the same aluminium alloy as the slides.

4. Conveyor according to one of claims 1 to 3, characterised in that the rollers (12) intended for supporting the belt on its return trip are made of the same aluminium alloy as the slides and possess outer ribs (15) of a height and number calculated to ensure that the belt is in contact with the roller only by means of its ribs.

5. Conveyor according to one of claims 1 to 4, characterised in that the slides are fitted, on their face which is in contact with the belt (1), with sliding strips (10) made of low-friction material.

6. Conveyor according to claim 5, characterised in that the said low-friction material is natural po

lyethylene, whilst the face of the belt (1) which is in contact with the said slides is made of unbleached linen.

7. Conveyor according to one of claims 1 to 6, characterised in that the aluminium alloy is of the type AG5 MH III, containing in % by weight: Mg 5,2; Zn 0,2; Fe $\leqslant$ 0,5; Si $\leqslant$ 0,4; Cu $\leqslant$ 0,1; Mn $\leqslant$ 1; Ti $\leqslant$ 0,15; Cr $\leqslant$ 0,25, and having an elongation limit of approximately 20%, a Brinell hardness of 65–75 and a fatigue limit of 14,5 hbars.

1/1